# EUROPEAN PATENT SPECIFICATION

(11) **EP 3 427 472 B1**
(45) Date of publication and mention of the grant of the patent: **07.04.2021**
(21) Application number: 17782709.4
(22) Date of filing: 14.04.2017
(51) Int. Cl.: H04N 5/232, H04N 5/225, G06F 3/0488

(54) **IMAGE CAPTURING METHOD AND ELECTRONIC DEVICE SUPPORTING THE SAME**
BILDERFASSUNGSVERFAHREN UND ELEKTRONISCHE VORRICHTUNG ZUR UNTERSTÜTZUNG DAVON
PROCÉDÉ DE CAPTURE D'IMAGE ET DISPOSITIF ÉLECTRONIQUE PRENANT EN CHARGE CE DERNIER

(30) Priority: 14.04.2016 KR 20160045320
(43) Date of publication of application: 16.01.2019
(73) Proprietor: Samsung Electronics Co., Ltd., Suwon-si, Gyeonggi-do 16677 (KR)
(72) Inventor: KIM, Hyo Gil, Yongin-si Gyeonggi-do 16930 (KR)
(74) Representative: HGF
(86) International application number: PCT/KR2017/004079
(87) International publication number: WO 2017/179954

(56) References cited:
- EP-A1- 2 555 097
- WO-A1-2011/007264
- US-A1- 2010 020 221
- US-A1- 2011 267 530
- US-A1- 2014 168 494
- US-A1- 2014 361 979
- US-A1- 2015 015 511
- US-A1- 2015 268 747
- US-A1- 2015 350 505
- US-A1- 2016 037 037
- US-A1- 2016 065 838
- US-A1- 2016 100 106
- US-B2- 8 203 640

## Description

### Technical Field

The present disclosure relates generally to an image capturing method and an electronic device supporting the same, and more particularly, to a method and apparatus for performing an image capturing function based on a multi-touch input.

### Background Art

An electronic device equipped with a camera, e.g., a smartphone, may display a preview image obtained via the camera and may capture an image photographed via the camera in response to a photographing function button (e.g., a shutter) being selected. For example, an electronic device including a front camera may be used to preview and capture a selfie of a user.

More specifically, when taking a selfie, after the user grasps the electronic device and stretches his arm to secure the photographing distance between the camera and the user, the user may press the photographing function button. Alternatively, if the user performs specified motion without pressing the photographing function button, the electronic device may scan the specified motion of the user to execute the image capturing function US 2015/268747 A and US 2015/015511 A disclose an electronic device with a touch screen on a front and a side area of the device capable of detection multi-touch input in both areas and controlling a camera based on the detected touch inputs. WO 2011/007264 A and EP 2555097 A disclose capturing an image after a one touch input is released after zooming operation.

### Disclosure of Invention

### Technical Problem

However, because methods of grasping the electronic device and the sizes of users' hands are different, it is often inconvenient to press the photographing function button positioned at a fixed location, when the user's arm is outstretched. Additionally, it is often difficult to obtain a sharp picture due the user shaking the electronic device, when trying to press the photographing function button.

In addition to taking selfies, it is often difficult to obtain a sharp or clear picture, when capturing an image using a rear camera, because the electronic device is also shaken when the user presses the photographing function button.

### Solution to Problem

In accordance with an aspect of the present disclosure, an electronic device according to claim 1 is provided, which includes a housing; a camera; a display configured to display an image captured through the camera; a memory configured to store the image; a sensor module configured to sense a multi-touch input; and a processor configured to execute an image capturing function using the camera, in response to at least one touch input of the sensed multi-touch input being released.

In accordance with another aspect of the present disclosure, an electronic device is provided, which includes a housing; a first camera facing a first surface of the housing; a second camera facing a second surface of the housing; a display configured to display an image captured by the first camera or the second camera; a sensor module configured to sense movement of the electronic device; and a processor configured to analyze at least one of a location variation and an angle variation of the electronic device by using a physical quantity measured using the sensor module; and activate the second camera in response to the at least one of the location variation and the angle variation being greater than a specified magnitude.

In accordance with another aspect of the present disclosure, a method according to claim 6 is provided for capturing an image with an electronic device. The method includes activating a camera; detecting a multi-touch input from a user; and executing an image capturing function using the camera, in response to at least one touch input of the multi-touch input being released.

### Advantageous Effects of Invention

Accordingly, an aspect of the present disclosure is to provide an electronic device and a method for capturing an image in response to a multi-touch input coupled with a release of at least one touch input of the multi-touch input is released.

### Brief Description of Drawings

The above and other aspects, features, and advantages of certain embodiments of the present disclosure will be more apparent from the following description taken in conjunction with the accompanying drawings, in which:
FIG. 1 illustrates an electronic device according to an embodiment of the present disclosure;
FIG. 2 is a flow chart illustrating a method of performing a camera switching function in an electronic device, according to an embodiment of the present disclosure;
FIG. 3 is a flow chart illustrating a method of capturing an image using an electronic device, according to an embodiment of the present disclosure;
FIG. 4 illustrates a camera switching function in an electronic device, according to an embodiment of the present disclosure;
FIG. 5 illustrates screens displayed while capturing an image using an electronic device, according to an embodiment of the present disclosure; and
FIG. 6 illustrates screens displayed while capturing an image using autofocus, according to an embodiment of the present disclosure.

### Mode for the Invention

Hereinafter, various embodiments of the present disclosure are described with reference to accompanying drawings. Accordingly, those of ordinary skill in the art will recognize that modification, equivalent, and/or alternative on the various embodiments described herein can be variously made without departing from the scope of the present disclosure. In the drawings and the descriptions thereof, similar elements may be identified by similar reference numerals.

Terms and expressions used in this disclosure are used to describe specified embodiments and are not intended to limit the scope of the present disclosure. Terms of a singular form may include plural forms unless otherwise specified. All of the terms used herein, which include technical or scientific terms, may have the same meaning that is generally understood by a person skilled in the art.

Terms, which are defined in a dictionary and commonly used, should also be interpreted as is customary in the relevant related art and not in an idealized or overly formal way unless expressly defined as such herein. Even if terms are defined in the disclosure, they may not be interpreted to exclude any embodiments of this disclosure.

Herein, the expressions "have", "may have", "include" "comprise", "may include" and "may comprise" indicate the existence of corresponding features (e.g., elements such as numeric values, functions, operations, components, etc.) but do not exclude the presence of additional features.

The expressions "A or B", "at least one of A or/and B", and "one or more of A or/ and B" may include any and all combinations of one or more of the associated listed items. For example, the expression "A or B", "at least one of A and B", or "at least one of A or B" may refer to (1) where at least one A is included, (2) where at least one B is included, or (3) where both of at least one A and at least one B are included.

Numerical terms, such as "first", "second", etc., used herein, may be used to refer to various elements regardless of an order and/or a priority and to distinguish elements from each other, but do not limit the elements. For example, "a first user device" and "a second user device" indicate different user devices, regardless of an order or a priority. Accordingly, a first element may be referred to as a second element, and similarly, a second element may be referred to as a first element.

When an element (e.g., a first element) is referred to as being "(operatively or communicatively) coupled with/to" or "connected to" another element (e.g., a second element), the first element may be directly coupled with/to or connected to the second element or an intervening element (e.g., a third element) may be present therebetween. However, when the first element is referred to as being "directly coupled with/to" or "directly connected to" the second element, no intervening element may be present therebetween.

According to context, the expression "configured to" may be interchangeably used with "suitable for", "having the capacity to", "designed to", "adapted to", "made to", or "capable of". The expression "configured to" does not only mean "specifically designed to" in terms of hardware. Instead, "a device configured to" may indicate that the device is "capable of' operating together with another device or other components. For example, a "processor configured to (or set to) perform A, B, and C" may indicate a dedicated processor (e.g., an embedded processor) for performing a corresponding operation or a generic-purpose processor (e.g., a central processing unit (CPU) or an application processor), which performs corresponding operations by executing one or more software programs that are stored in a memory device.

Electronic devices according to an embodiment of the disclosure may include smartphones, tablet personal computers (PCs), mobile phones, video telephones, electronic book readers, desktop PCs, laptop PCs, netbook computers, workstations, servers, personal digital assistants (PDAs), portable multimedia players (PMPs), Motion Picture Experts Group (MPEG-1 or MPEG-2) Audio Layer 3 (MP3) players, mobile medical devices, cameras, or wearable devices. For example, a wearable device may include an accessory type device (e.g., a watch, a ring, a bracelet, an anklet, a necklace, glasses, a contact lens, or a head-mounted-device (HMD)), a fabric or garment-integrated type device (e.g., an electronic apparel), a body-attached type device (e.g., a skin pad or a tattoo), or a bio-implantable type device (e.g., an implantable circuit).

Electronic devices may also include home appliances, such as televisions (TVs), digital versatile disc (DVD) players, audio players, refrigerators, air conditioners, cleaners, ovens, microwave ovens, washing machines, air cleaners, set-top boxes, home automation control panels, security control panels, TV boxes (e.g., Samsung HomeSyncTM, Apple TVTM, or Google TVTM), game consoles (e.g., XboxTM or PlayStationTM), electronic dictionaries, electronic keys, camcorders, electronic picture frames, etc.

Electronic devices may also include various medical devices (e.g., various portable medical measurement devices, such as blood glucose monitoring devices, heartbeat measuring devices, blood pressure measuring devices, body temperature measuring devices, etc., magnetic resonance angiography (MRA) devices, magnetic resonance imaging (MRI) devices, computed tomography (CT) devices, scanners, and ultrasonic devices), navigation devices, Global Navigation Satellite Systems (GNSSs), event data recorders (EDRs), flight data recorders (FDRs), vehicle infotainment devices, electronic equipment for vessels (e.g., navigation systems and gyrocompasses), avionics, security devices, head units for vehicles, industrial or home robots, automatic teller machines (ATMs), point of sales (POS) devices of stores, or internet of things (IoT) devices (e.g., light bulbs, sensors, electric or gas meters, sprinkler devices, fire alarms, thermostats, street lamps, toasters, exercise equipment, hot water tanks, heaters, boilers, etc.).

The electronic devices may also include parts of furniture or buildings/structures, electronic boards, electronic signature receiving devices, projectors, or various measuring instruments (e.g., water meters, electricity meters, gas meters, wave meters, etc.).

The electronic devices may also include flexible electronic devices.

Additionally, the electronic devices may be one of the above-described devices or a combination thereof.

Further, an electronic device according to an embodiment of the disclosure is not limited to the above-described example electronic devices and may include other electronic devices and new electronic devices according to the development of different technologies.

Herein, the term "user" may refer to a person who uses an electronic device or may refer to a device (e.g., an artificial intelligence electronic device) that uses the electronic device.

Additionally, the expressions "image capturing function" and "a photographing function" may be used interchangeably and include capturing a single image, such as a photograph, multiple images, such as a burst shot, and video.

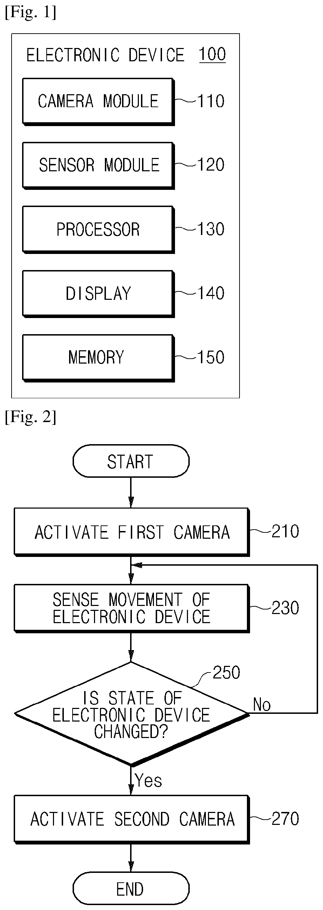

FIG. 1 illustrates an electronic device, according to an embodiment of the present disclosure.

Referring to FIG. 1, the electronic device 100 includes a camera module 110, a sensor module 120, a processor 130, the display 140, and a memory 150. However, a configuration of the electronic device 100 is not limited thereto. For example, the electronic device 100 may omit at least one of the above-described elements, or may further include at least another element, such as an input interface to obtain a user input and/or a communication module to transmit data to an external electronic device through wireless/wired communication.

The electronic device 100 including the camera module 110 may perform image capturing, e.g., support a photographing function. The electronic device 100 may display, via the display 140, a preview image obtained from the camera module 110 and may capture a photographed image using the camera module 110, in response to a photographing function button (e.g., a shutter) being selected.

To prevent the electronic device 100 from shaking when the photographing function button is selected, the electronic device 100 may detect a multi-touch input followed by a release of at least one touch input of the multi-touch input as an execute command for capturing the image.

Elements of the above-described electronic device 100 may be positioned and fixed to an inner side surface and an outer side surface of a housing, which constitutes at least a part of the appearance of the electronic device 100. The housing may include a front surface, a rear surface, and a side surface at least partially surrounding a space between the front surface and the rear surface. Further, the housing may include at least one through hole on at least one side surface, and at least one of elements of the electronic device 100 may be exposed to the outside through the through hole.

As another example, the housing may be coupled with a front case constituting a front appearance of the electronic device 100. For example, the front case may be coupled with the housing where the front case is spaced apart from the housing by a space that is capable of containing elements of the electronic device 100 inside the housing. The front case may be formed of a transparent material (e.g., glass) such that a screen output to the display 140 is displayed to the outside through a transparent area of the front case.

The camera module 110 may capture a still image and/or a video. The camera module 110 may include a lens that receives light reflected from a subject and converts the light into an image, an aperture that adjusts the amount of light passing through the lens, a photographing function button (e.g., a shutter) that executes an image capture function, an image sensor that receives the image received from the lens as a light signal, and an internal memory. The internal memory may temporarily store the captured image. The internal memory may also store an image sensed through the image sensor, before the photographing function button is manipulated.

As another example, the processor 130 may provide the image stored in the internal memory as a preview image, a live view, etc. The processor 130 may store the image, which is photographed by manipulating (or selecting) the photographing function button, in the internal memory and may transmit the photographed image to the memory 150 in response to a specified user input or based on the set information (e.g., a configuration value).

The camera module 110 may include a plurality of lenses, an aperture, and an image sensor. The plurality of lenses, the aperture, and the image sensor may be connected with the photographing function button and the internal memory and may support image capturing in at least one direction of the electronic device 100. Hereinafter, at least one lens, an aperture, and an image sensor that are connected to the photographing function button and internal memory may be referred to as a "camera".

The electronic device 100 may include a rear camera (or a first camera) that supports image capturing in a direction of the rear surface of the electronic device 100 and a front camera (or a second camera) that supports image capturing in a direction of the front surface of the electronic device 100. For example, the rear camera may be exposed to the outside through a through hole provided on the rear surface of the housing and may support the image capturing in the direction of the rear surface, and the front camera may be exposed to the outside through the through hole provided on the front surface of the housing and may support the image capturing in the direction of the front surface.

The sensor module 120 may measure a physical quantity or may detect an operation state of the electronic device 100. The sensor module 120 may convert the measured or detected information to an electric signal. For example, the sensor module 120 may include at least one of a gyro sensor, an acceleration sensor, a proximity sensor, a touch sensor, and a grip sensor, but is not limited thereto. That is, the sensor module 120 may include at least another sensor. In addition, the sensor module 120 may include a control circuit that controls at least one of the sensors included therein. The electronic device 100 may also include a processor, which is a part of the processor 130 or independent of the processor 130, configured to control the sensor module 120. The processor may control the sensor module 120 while the processor 130 remains in a sleep state.

The sensor module 120 may sense movement of the electronic device 100. The sensor module 120 may sense a location change, an angle change (or a rotation), etc., of the electronic device 100 based on the gyro sensor, the acceleration sensor, etc. The sensor module 120 may sense whether an object is within a predetermined distance of the electronic device 100, based on the proximity sensor. For example, the sensor module 120 may sense the proximity of the user and may measure a spaced distance between the electronic device 100 and the user, based on the proximity sensor.

The sensor module 120 may sense a touch input of a touch object (e.g., a portion of user's body), based on at least one of the touch sensor and the grip sensor. For example, the sensor module 120 may measure the physical quantity (e.g., the variation of the capacitance) changed according to a contact or proximity of the touch object and may transmit the measured physical quantity to the processor 130. In this case, the processor 130 may determine whether the touch input occurs, by analyzing the physical quantity received from the sensor module 120. Further, the processor 130 may determine a number of touch inputs, a location of a touch input, an occurrence time of a touch input, a duration of a touch input, etc. The touch sensor may be included in the display 140, and the grip sensor may be mounted inside one surface of the housing. For example, the grip sensor may be mounted inside a periphery (e.g., a bezel area) of an area, in which the display 140 is mounted, in the front surface of the housing.

The processor 130 may include a CPU, an application processor (AP), and/or a communication processor (CP). The processor 130 may perform, for example, data processing or an operation associated with control or communication of at least one other element(s) of the electronic device 100.

The processor 130 may determine the movement of the electronic device 100 by analyzing the physical quantity measured based on the sensor module 120. For example, the processor 130 may analyze the location variation and the angle variation of the electronic device 100 by using the physical quantity measured based on the gyro sensor, the acceleration sensor, etc.

The processor 130 may determine whether a touch input occurs, a number of touch inputs, a location of the touch input, an occurrence time of a touch input, a duration of a touch input, etc., by analyzing the physical quantity measured based on the sensor module 120. For example, the processor 130 may determine whether a multi-touch input occurs, and may also determine whether at least one touch input of the multi-touch input is released. The processor 130 may also determine whether the multi-touch input is an input of grasping of the electronic device 100, by analyzing locations of touch inputs included in the multi-touch input.

The processor 130 may control activation/deactivation (or an on/off operation) of the camera module 110. For example, if an application (e.g., a camera application) supporting image capturing is executed by using the camera module 110, the processor 130 may activate the camera module 110. Moreover, if the application is closed, the processor 130 may deactivate the camera module 110.

The processor 130 may switch from the one camera (e.g., a front camera) to the other camera (e.g., a front camera), in response to movement of the electronic device 100. For example, if at least one of the location variation and the angle variation of the electronic device 100 is greater than a specified magnitude while the rear camera is activated, the processor 130 may deactivate the rear camera and activate the front camera. Alternatively, if at least one of the location variation and the angle variation of the electronic device 100 is greater than the specified magnitude while the front camera is activated, the processor 130 may deactivate the front camera and activate the rear camera.

The processor 130 may be electrically connected with a lens, an aperture, an image sensor, and a photographing function button included in the camera module 110 and may control functions associated with the camera module 110. For example, the processor 130 may control functions, such as autofocus, auto exposure, custom white balance, zoom in, zoom out, image capturing, continuous image capturing, timer image capturing, flash on-off, a filter, etc.

The processor 130 may be electrically connected with an internal memory included in the camera module 110, the display 140, and the memory 150 and may control functions such as storing, transmitting, and outputting, etc., of the captured image. For example, the processor 130 may control the captured image to be stored in the internal memory or the memory 150 and may control the captured image to be output to the display 140.

If at least one of the touch inputs of the multi-touch input is released and the multi-touch input is maintained, e.g., a 1 touch of a 3-touch input is released, the processor 130 may control the camera module 110 to perform an image capturing function, e.g., to obtain an image of a subject through the camera module 110.

Even though at least one touch input of the multi-touch input is released, when the camera module 110 is not activated or when execution of a specified function (e.g., an auto-focus function) among the functions included in the camera module 110 is not completed, the processor 130 may control the camera module 110 such that an image capturing function is not executed.

The display 140 may include a liquid crystal display (LCD), a light-emitting diode (LED) display, an organic LED (OLED) display, a microelectromechanical systems (MEMS) display, and/or an electronic paper display. The display 140 may display various types of content (e.g., text, images, videos, icons, symbols, etc.) to a user.

The display 140 may display the image captured through the camera module 110. In addition, the display 140 may display an image stored in the internal memory included in the camera module 110 or the memory 150. The display 140 may include a touch screen and may receive a touch input, a gesture input, a proximity input, and/or a hovering input by using an electronic pen or a part of a user's body.

The display 140 may be formed such that at least a partial area (hereinafter referred to as an "edge area) of a periphery thereof has a specified curvature. For example, the display 140 may include a curved surface part in the edge area. The display 140 may include the curved surface part in at least one of a left edge area and a right edge area. In a housing in which the display 140 is positioned, an area adjacent to the edge area in which the curved surface part is included may omit a bezel area. For example, the area adjacent to the edge area in which the curved surface part is included may omit the bezel area, such that the curved surface part of the display 140 is exposed to the outside.

The memory 150 may include a volatile memory and/or a nonvolatile memory. For example, the memory 150 may store instructions or data associated with at least one other element(s) of the electronic device 100. The memory 150 may store software and/or a program. For example, the memory 150 may store an application (e.g., a camera application), which supports image capturing, by using the camera module 110. The memory 150 may store the image captured through the camera module 110. The memory 150 may include an internal (or embedded) memory or an external memory.

As described above, an electronic device (e.g., the electronic device 100) may include a housing including a first surface facing in a first direction, a second surface facing in a second direction opposite to the first direction, and a side surface surrounding at least a part of a space between the first surface and the second surface, at least one camera (e.g., the camera module 110) of which at least a part is exposed to an outside through a through hole formed in at least one surface of the housing, a display (e.g., the display 140) that outputs an image obtained through the at least one camera, a memory (e.g., the memory 150) that stores the image, a sensor module (e.g., the sensor module 120) that senses a touch input of a touch object, and a processor (e.g., the processor 130) operatively connected with the at least one camera, the display, the memory, and the sensor module. The processor is configured to execute an image capturing function based on the at least one camera if at least one touch input of a multi-touch input is released in a state where the multi-touch input sensed based on the sensor module is maintained.

The sensor module may include at least one of a touch sensor included in the display and a grip sensor mounted inside a periphery of an area, in which the display is positioned, of one surface of the housing.

The processor may be configured to execute a specified function based on the at least one camera if the multi-touch input is sensed.

The specified function may include an auto-focus function.

The processor may be configured not to execute the image capturing function if at least one touch input of the multi-touch input is released in a state where the execution of the specified function is not completed.

The processor may be configured to output at least one of a display object and a voice object providing notification that the execution of the specified function is not completed, if the at least one touch input of the multi-touch input is released in a state where the execution of the specified function is not completed.

The processor may be configured to store an image obtained from the at least one camera through execution of the image capturing function in the memory.

The display may include a curved surface part formed such that at least a partial area of a periphery has a specified curvature.

An electronic device may also include a housing including a first surface facing in a first direction, a second surface facing in a second direction opposite to the first direction, and a side surface surrounding at least a part of a space between the first surface and the second surface, a first camera of which at least a part is exposed to an outside through a through hole formed in the first surface of the housing, a second camera of which at least a part is exposed to the outside through a through hole formed in the second surface of the housing, a display that outputs an image obtained through the first camera or the second camera, a sensor module that senses movement of the electronic device, and a processor operatively connected with the first camera, the second camera, the display, and the sensor module. The processor may be configured to analyze at least one of a location variation and an angle variation of the electronic device by using a physical quantity measured based on the sensor module and to activate the second camera if the at least one of the location variation and the angle variation is not less than a specified magnitude.

The first camera may support image capturing in a direction different from a direction in which a screen of the display is exposed to the outside. The second camera may support image capturing in a direction the same as the direction in which the screen of the display is exposed to the outside.

The sensor module may include at least one of a gyro sensor and an acceleration sensor.

The processor may be configured to deactivate the first camera if the first camera is in an active state when the second camera is activated.

FIG. 2 is a flow chart illustrating a method of performing a camera switching function in an electronic device, according to an embodiment of the present disclosure.

Referring to FIG. 2, in step 210, an electronic device (e.g., the electronic device 100) activates a first camera (e.g., a rear camera). If an application supporting image capturing (e.g., a camera application) is executed by using a camera module (e.g., the camera module 110), the electronic device may activate the first camera, based on set information (e.g., configuration value) or history information from when the application was last activated.

In step 230, the electronic device senses movement of the electronic device. The electronic device may sense the movement of the electronic device, based on a sensor module (e.g., the sensor module 120). For example, the electronic device may sense a location change, an angle change, etc., of the electronic device by analyzing a physical quantity measured through a gyro sensor, an acceleration sensor, etc., included in the sensor module.

In step 250, the electronic device determines whether a state of the electronic device changes. For example, the electronic device may determine a location variation and an angle variation of the electronic device 100, based on analyzing a physical quantity obtained through the gyro sensor, the acceleration sensor, etc. When each of the location variation and the angle variation is greater than a specified magnitude, the electronic device may determine that the state of the electronic device has changed.

When it is determined that the state of the electronic device has not changed in step 250, the electronic device may maintain the active state of the first camera and continue to monitor the state of the electronic device in step 230. When it is determined that the state of the electronic device has changed in step 250, the electronic device activates a second camera (e.g., a front camera) in step 270. The electronic device may also deactivate the first camera.

As described above, the electronic device may conveniently switch between cameras based on a state change of the electronic device. For example, an operation of manipulating the camera switching button or the like may be omitted by the electronic device switching from the rear camera to a front camera for a selfie, in response to the user lifting the phone in front of the user's face.

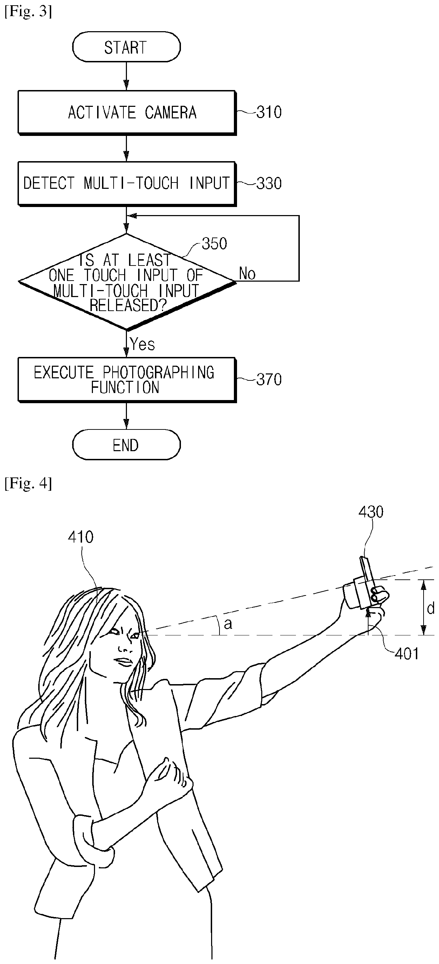

FIG. 3 is a flow chart illustrating a method of capturing an image using an electronic device, according to an embodiment of the present disclosure.

Referring to FIG. 3, in step 310, an electronic device (e.g., the electronic device 100) activates a camera (e.g., a front camera). If an application supporting image capturing (e.g., a camera application) is executed by using a camera module (e.g., the camera module 110), the electronic device may activate the camera, based on set information (e.g., configuration value) or history information activated from when the application was last activated.

In step 330, the electronic device detects a multi-touch input. The electronic device may detect the multi-touch input based on a sensor module (e.g., the sensor module 120, e.g., by analyzing a physical quantity measured through a touch sensor, a grip sensor, etc., that is included in the sensor module. For example, when a user grasps the electronic device, the user's fingers may contact a display of the electronic device (e.g., the display 140) and/or a bezel area of a housing. In this case, the multi-touch input by a grasp may be sensed through a touch sensor included in a display and/or a grip sensor mounted in a bezel area of a housing.

In step 350, the electronic device determines whether at least one touch input of the multi-touch input is released. If at least one of physical quantities corresponding to touch inputs obtained from the touch sensor, the grip sensor, etc., is not obtained, the electronic device may determine that at least one touch input is released. For example, if the user lifts at least one of fingers that grasp the electronic device from the display and the bezel area of the housing, the electronic device may determine that touch inputs are released by the number of lifted fingers.

When the electronic device determines that at least one touch input of the multi-touch input is not released in step 350, the electronic device recognizes that the multi-touch input is maintained.

While the multi-touch input is maintained, the electronic device may determine that the electronic device is in an image capturing preparation state and may execute functions corresponding to the image capturing preparation state. For example, the electronic device may execute a specified function (e.g., an auto-focus function) of functions included in a camera module.

When the electronic device determines that at least one touch input of the multi-touch input is released in step 350, the electronic device executes an image capturing function in step 370. For example, the electronic device may capture an image of a subject through the camera module. Further, the electronic device may store the captured image in a memory (e.g., the memory 150) and may display the captured image via the display.

The electronic device may execute a specified function among functions included in the camera module, e.g., an auto-focus function, after step 330 is performed. As another example, in step 350, when the auto-focus function is not completed, even though at least one touch input of the multi-touch input is released, the electronic device may refrain from executing the image capturing function in step 370. For example, the electronic device prevent the image capturing function from being executed to prevent an unfocused image from being obtained.

Alternatively, the electronic device may execute the auto-focus function after step 310 is performed.

As described above, an image capturing method of an electronic device including at least one camera may include activating a first camera, detecting a multi-touch input based on a sensor module that senses at least one of a touch input of a touch object and movement of the electronic device, and executing a photographing function based on the activated first camera if at least one touch input of the multi-touch input is released in a state where the multi-touch input is maintained.

Detecting the multi-touch input may include detecting the multi-touch input based on at least one of a touch sensor included in a display of the electronic device and a grip sensor mounted inside a periphery of an area, in which the display is positioned, of one surface of a housing constituting at least a part of an appearance of the electronic device.

The method may further include executing a specified function based on the activated first camera if the multi-touch input is sensed.

Executing the specified function may include executing an auto-focus function.

The method may further include controlling the image capturing function so as not to be executed if the at least one touch input of the multi-touch input is released in a state where execution of the specified function is not completed.

The method may further include outputting at least one of a display object and a voice object providing notification that the execution of the specified function is not completed, if the at least one touch input of the multi-touch input is released in a state where the execution of the specified function is not completed.

Activating the first camera may include analyzing at least one of a location variation and an angle variation of the electronic device by using a physical quantity measured based on the sensor module, and activating the first camera if the at least one of the location variation and the angle variation is not less than a specified magnitude.

Activating of the first camera may include deactivating a second camera if the second camera different from the first camera is activated.

FIG. 4 illustrates a camera switching function in an electronic device, according to an embodiment of the present disclosure.

Referring to FIG. 4, a user 410 may capture an image, e.g., take a photograph, by using a camera module included in an electronic device 430. For example, the user 410 may take a selfie by using a front camera. To take the selfie, as illustrated in FIG. 4, the user's arm is extended while holding the electronic device 430 to secure a photographing distance from the front camera. However, because it is often inconvenient for the user 410 to press a photographing function button while the user 410 stretches her arm, in accordance with an embodiment of the present disclosure, the electronic device 430 may detect a multi-touch input by from the user's grasp and may capture an image if at least one touch input of the multi-touch input is released. For example, the electronic device 430 may support image capturing if at least one of the grasping fingers is lifted off of the electronic device 430.

Additionally or alternatively, the electronic device 430 may switch between cameras in response to movement of the electronic device 430, e.g., movement 401, in which the user 410 lifts the electronic device 430. For example, the user 410 may change an image capturing angle by lifting the electronic device 430 to obtain a desired picture during a selfie. In this case, even though a camera switching button is not manipulated, the electronic device 430 may still activate the front camera for the selfie.

For example, if each of a location variation 'd' and an angle variation 'a' of the electronic device 430 is greater than a specified magnitude, the electronic device 430 may activate the front camera. The electronic device 430 may also deactivate the rear camera. That is, the electronic device 430 may switch from the rear camera to the front camera to capture an image, e.g., a selfie.

As described above, if the user 410 lifts the electronic device 430, the electronic device 430 may activate a first camera (e.g., the front camera). Before the first camera is activated, both the first camera and a second camera (e.g., the rear camera) may be in an inactive state, or the first camera may be in an inactive state and the second camera may be in an active state. Where the second camera is in the active state, the electronic device 430 may deactivate the second camera. Further, if the user 410 lifts at least one of the fingers grasping the electronic device 430, i.e., removes one of the fingers making a multi-touch input, while the first camera is activated, the electronic device 430 may execute an image capturing function, e.g., take a selfie.

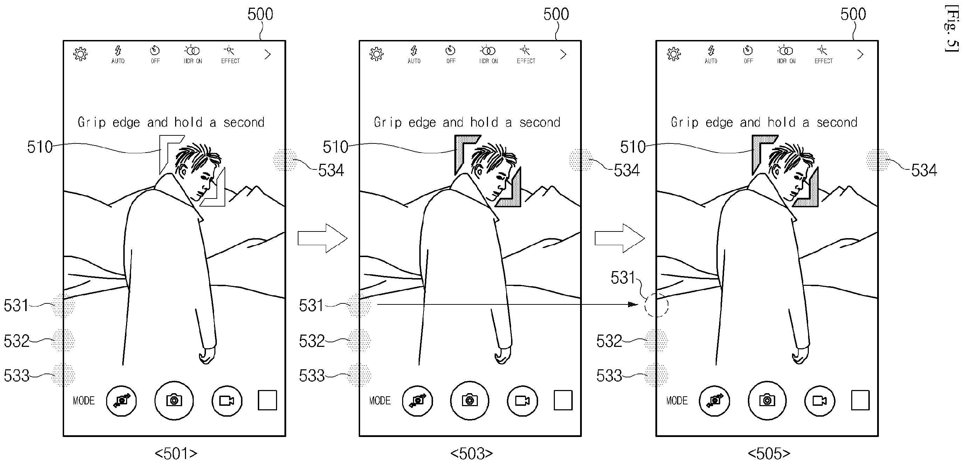

FIG. 5 illustrates screens displayed while capturing an image using an electronic device, according to an embodiment of the present disclosure.

Referring to FIG. 5, if an application supporting image capturing (e.g., a camera application) is executed by using a camera module, an electronic device may activate the camera module. In addition, as illustrated in a screen 501, the electronic device outputs a preview image obtained from the camera module to a display 500. Additionally, the electronic device outputs a focus display object 510, which displays a target area for matching a focus, to the display 500.

The electronic device may sense a multi-touch input. For example, the electronic device may detect whether a plurality of touch objects (e.g., fingers of a user) contact the display 500 and/or a bezel area of a housing. For example, the electronic device may sense the multi-touch input through a touch sensor included in the display 500 and/or a grip sensor mounted in the bezel area of the housing.

FIG. 5 illustrates a first touch input 531, a second touch input 532, and a third touch input 533 occurring in a left periphery area of the display 500 and a fourth touch input 534 occurring in a right periphery area of the display 500.

If the multi-touch input is sensed, the electronic device may execute an auto-focus function. If the execution of the auto-focus function is completed (e.g., if focusing is completed), as illustrated in a screen 503, the electronic device changes an output state of the focus display object 510, e.g., displays the focus display object 510 with a different color, periphery color, periphery thickness, etc.

If at least one touch input of the multi-touch input is released, the electronic device may execute a photographing function. For example, if at least one of the first touch input 531, the second touch input 532, the third touch input 533, and the fourth touch input 534 is released, the electronic device may capture an image of a subject through the camera module.

As illustrated in a screen 505, the first touch input 531 is released and the image capturing function is executed. As another example, the electronic device may store the captured image in a memory and may display the captured image via the display 500. If the electronic device displays the captured image via the display 500 for a specified time period and the specified time period elapses, the electronic device may output a preview image again.

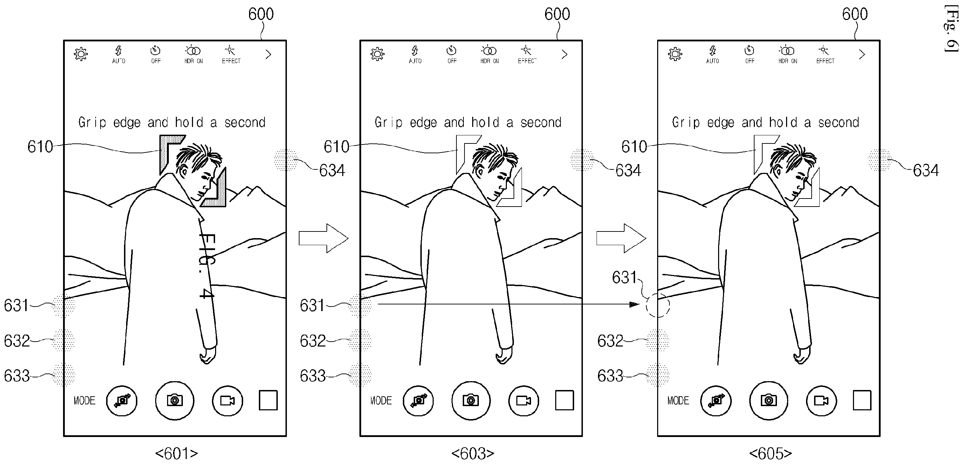

FIG. 6 illustrates screens displayed while capturing an image using autofocus, according to an embodiment of the present disclosure.

Referring to FIG. 6, an electronic device may display a preview image obtained from a camera module via a display 600. In addition, if the multi-touch input is sensed, the electronic device may execute an auto-focus function. If the camera module is activated, the electronic device may execute an auto-focus function.

In addition to the preview image, the electronic device outputs a focus display object 610, which displays a target area for matching a focus, via the display 600. The electronic device may change an output state of the focus display object 610 to easily distinguish between a state before the focus is matched and a state after the focus is matched. For example, the electronic device may change a color, a periphery color, periphery thickness, etc., of the focus display object 610 based on a focus state.

In FIG. 6, a screen 601 illustrates when the focus is matched, and a screen 603 illustrates when the focus is not matched.

If at least one touch input of the multi-touch input is released after the multi-touch input occurs, the electronic device may execute an image capturing function. For example, if at least one of a first touch input 631, a second touch input 632, and a third touch input 633, which occur in a left periphery area of the display 600, and a fourth touch input 634, which occurs in a right periphery area of the display 600, is released, the electronic device may execute the photographing function.

The electronic device may also determine whether the image capturing function is executed, based on a focus state. For example, if the user attempts to execute the image capturing function, e.g., by releasing at least one touch input of the multi-touch input, before the focus is matched, the electronic device may prevent execution of the image capturing function.

As illustrated in a screen 605 in FIG. 6, the first touch input 631 is released while the focus is not matched, i.e., the focus display object 610 is still white. As a result, the electronic device does not execute the image capturing function.

If at least one touch input of the multi-touch input is released while the focus is not matched, the electronic device may display an object (e.g., text) or output an audible notification, e.g., a voice object, providing notification that the focus is not matched.

Herein, the term "module" may represent, for example, a unit including one or more combinations of hardware, software and firmware. The term "module" may be interchangeably used with the terms "unit", "logic", "logical block", "component" and "circuit". A "module" may be a minimum unit of an integrated component or may be a part thereof. A "module" may be a minimum unit for performing one or more functions or a part thereof. A "module" may be implemented mechanically or electronically. For example, a "module" may include at least one of an application-specific integrated circuit (ASIC) chip, a field-programmable gate array (FPGA), and a programmable-logic device for performing some operations, which are known or will be developed.

At least a part of an apparatus (e.g., modules or functions thereof) or a method (e.g., operations) according to various embodiments may be, for example, implemented by instructions stored in a computer-readable storage media in the form of a program module. The instruction, when executed by a processor (e.g., the processor 130), may cause the processor to perform a function corresponding to the instruction. The computer-readable storage media, for example, may be the memory 150.

A computer-readable recording medium may include a hard disk, a floppy disk, a magnetic media (e.g., a magnetic tape), an optical media (e.g., a compact disc read only memory (CD-ROM) and a digital versatile disc (DVD), a magneto-optical media (e.g., a floptical disk)), and hardware devices (e.g., a read only memory (ROM), a random access memory (RAM), or a flash memory). A program instruction may include a mechanical code such as things generated by a compiler and also a high-level language code executable on a computer using an interpreter. The above-described hardware unit may be configured to operate via one or more software modules for performing an operation according to various embodiments, and vice versa.

A module or a program module according to various embodiments may include at least one of the above elements, or a part of the above elements may be omitted, or additional other elements may be further included. Operations performed by a module, a program module, or other elements according to various embodiments may be executed sequentially, in parallel, repeatedly, or in a heuristic method. In addition, some operations may be executed in different sequences or may be omitted. Alternatively, other operations may be added.

According to embodiments described in the present disclosure, a sharp picture may be obtained by providing an image capturing method in which there is little shake of an electronic device.

In addition, according to embodiments described in the present disclosure, the usability of the electronic device may increase by providing an image capturing method regardless of a method for grasping the electronic device and the size of the hand of the user.

While the present disclosure has been shown and described with reference to various embodiments thereof, it will be understood by those skilled in the art that various changes in form and details may be made therein without departing from the scope of the present disclosure as defined by the appended claims.

## Claims

1. An electronic device (100), comprising:
a housing;
a camera (110);
a touchscreen display (140, 500);
a memory (150); and
a processor (130) configured to:
execute a camera application,
while the camera application is being executed, control the touchscreen display to detect a multi-touch input (531, 532, 533) including at least two touch inputs on a periphery area including the front area of the touchscreen display and a side area of the touchscreen display or the housing,
control the touchscreen display to detect at least one touch input of the at least two touch inputs being released, and
control the camera to capture an image without another input, in response to detecting one touch input of the at least two touch inputs being released and the multi-touch input is maintained.

2. The electronic device of claim 1, wherein the processor is further configured to execute a specified function in response to the multi-touch input being sensed.

3. The electronic device of claim 2, wherein the specified function comprises an auto-focus function.

4. The electronic device of claim 2, wherein the processor is further configured to prevent execution of the image capturing function when the at least one touch input of the multi-touch input is released while the execution of the specified function is not completed.

5. The electronic device of claim 4, wherein the processor is further configured to output at least one of a visual notification and an audible notification that the execution of the specified function is not completed, when the at least one touch input of the multi-touch input is released while the execution of the specified function is not completed.

6. A method of capturing an image by an electronic device (100) including a camera (110), the method comprising:
activating (310) the camera;
detecting (330) a multi-touch input including at least two touch inputs on a periphery area including the front area of the touchscreen display and a side area of the touchscreen display or the housing (531, 532, 533) from a user; and
executing (350, 370) an image capturing function using the camera without another input, in response to one touch input of the multi-touch input being released and the multi-touch input is maintained.

7. The method of claim 6, further comprising executing a specified function in response to the multi-touch input being sensed.

8. The method of claim 7, wherein executing the specified function comprises executing an auto-focus function.

9. The method of claim 7, further comprising preventing the image capturing function from being executed, when the at least one touch input of the multi-touch input is released while execution of the specified function is not completed.

10. The method of claim 6, wherein activating the camera comprises:
analyzing at least one of a location variation and an angle variation of the electronic device by using a physical quantity measured using a sensor module; and
activating the camera, in response to the at least one of the location variation and the angle variation being greater than a specified magnitude.

11. The method of claim 6, further comprising deactivating another camera, in response to the camera being activated while the another camera is activated.

## Patentansprüche

1. Elektronisches Gerät (100), umfassend:
ein Gehäuse;
eine Kamera (110);
ein Touchscreen-Display (140, 500);
einen Speicher (150); und
einen Prozessor (130), der konfiguriert ist, um:
eine Kameraanwendung auszuführen,
während die Kameraanwendung ausgeführt wird, das Touchscreen-Display so zu steuern, dass eine Mehrfachberührungseingabe (531, 532, 533) erfasst wird, die mindestens zwei Berührungseingaben in einem Peripheriebereich umfasst, der den vorderen Bereich des Touchscreen-Displays und einen Seitenbereich des Touchscreen-Displays oder des Gehäuses umfasst,
das Touchscreen-Display zu steuern, um zu erfassen, dass mindestens eine Berührungseingabe der mindestens zwei Berührungseingaben freigegeben wird, und
die Kamera zu steuern, um ein Bild ohne weitere Eingabe aufzunehmen, als Reaktion auf das Erfassen, dass eine Berührungseingabe der mindestens zwei Berührungseingaben freigegeben wird und die Mehrfachberührungseingabe beibehalten wird.

2. Elektronisches Gerät nach Anspruch 1, wobei der Prozessor ferner konfiguriert ist, um eine spezifizierte Funktion als Reaktion auf die Mehrfachberührungseingabe auszuführen, die erfasst wird.

3. Elektronisches Gerät nach Anspruch 2, wobei die spezifizierte Funktion eine Autofokusfunktion umfasst.

4. Elektronisches Gerät nach Anspruch 2, wobei der Prozessor ferner konfiguriert ist, um die Ausführung der Bildaufnahmefunktion zu verhindern, wenn die mindestens eine Berührungseingabe der Mehrfachberührungseingabe freigegeben wird, während die Ausführung der spezifizierten Funktion nicht abgeschlossen ist.

5. Elektronisches Gerät nach Anspruch 4, wobei der Prozessor ferner konfiguriert ist, um mindestens eine visuelle Benachrichtigung und eine akustische Benachrichtigung auszugeben, dass die Ausführung der spezifizierten Funktion nicht abgeschlossen ist, wenn die mindestens eine Berührungseingabe der Mehrfachberührungseingabe freigegeben wird, während die Ausführung der spezifizierten Funktion nicht abgeschlossen ist.

6. Verfahren zum Aufnehmen eines Bildes durch ein elektronisches Gerät (100), das eine Kamera (110) umfasst, wobei das Verfahren umfasst:
Aktivieren (310) der Kamera;
Erfassen (330) einer Mehrfachberührungseingabe von einem Benutzer, die mindestens zwei Berührungseingaben in einem Peripheriebereich umfasst, der den vorderen Bereich des Touchscreen-Displays und einen Seitenbereich des Touchscreen-Displays oder des Gehäuses (531, 532, 533) umfasst, und
Ausführen (350, 370) einer Bildaufnahmefunktion unter Verwendung der Kamera, ohne weitere Eingabe, als Reaktion darauf, dass eine Berührungseingabe der Mehrfachberührungseingabe freigegeben wird und die Mehrfachberührungseingabe beibehalten wird.

7. Verfahren nach Anspruch 6, ferner umfassend das Ausführen einer spezifizierten Funktion als Reaktion darauf, dass die Mehrfachberührungseingabe erfasst wird.

8. Verfahren nach Anspruch 7, wobei das Ausführen der spezifizierten Funktion das Ausführen einer Autofokusfunktion umfasst.

9. Verfahren nach Anspruch 7, ferner umfassend das Verhindern der Ausführung der Bildaufnahmefunktion, wenn die mindestens eine Berührungseingabe der Mehrfachberührungseingabe freigegeben wird, während die Ausführung der spezifizierten Funktion nicht abgeschlossen ist.

10. Verfahren nach Anspruch 6, wobei das Aktivieren der Kamera umfasst:
Analysieren mindestens einer von einer Positionsänderung und einer Winkeländerung des elektronischen Geräts, indem eine physikalische Größe verwendet wird, die unter Verwendung eines Sensormoduls gemessen wurde; und
Aktivieren der Kamera, als Reaktion darauf, dass mindestens eine von der Positionsänderung und der Winkeländerung größer als eine spezifizierte Größe ist.

11. Verfahren nach Anspruch 6, ferner umfassend das Deaktivieren einer anderen Kamera, als Reaktion darauf, dass die Kamera aktiviert wird, während die andere Kamera aktiviert ist.

## Revendications

1. Dispositif électronique (100), comprenant :
un boîtier ;
une caméra (110) ;
un affichage à écran tactile (140, 500) ;
une mémoire (150) ; et
un processeur (130) configuré pour :
exécuter une application caméra,
pendant que l'application caméra est en cours d'exécution, commander à l'affichage à écran tactile de détecter une entrée multipoint (531, 532, 533) comprenant au moins deux entrées tactiles sur une zone périphérique comprenant la zone avant de l'affichage à écran tactile et une zone latérale de l'affichage à écran tactile ou le boîtier,
commander à l'affichage à écran tactile de détecter la libération d'au moins une entrée tactile des au moins deux entrées tactiles, et
commander à la caméra de capturer une image sans autre entrée, en réponse à la détection de la libération d'une entrée tactile des au moins deux entrées tactiles et du maintien de l'entrée multipoint.

2. Dispositif électronique selon la revendication 1, ledit processeur étant en outre configuré pour exécuter une fonction spécifiée en réponse à la détection de l'entrée multipoint.

3. Dispositif électronique selon la revendication 2, ladite fonction spécifiée comprenant une fonction de mise au point automatique.

4. Dispositif électronique selon la revendication 2, ledit processeur étant en outre configuré pour interdire l'exécution de la fonction de capture d'image lorsque l'au moins une entrée tactile de l'entrée multipoint est libérée alors que l'exécution de la fonction spécifiée n'est pas terminée.

5. Dispositif électronique selon la revendication 4, ledit processeur étant en outre configuré pour délivrer en sortie au moins l'une d'une notification visuelle et d'une notification audible notifiant que l'exécution de la fonction spécifiée n'est pas terminée, lorsque l'au moins une entrée tactile de l'entrée multipoint est libérée alors que l'exécution de la fonction spécifiée n'est pas terminée.

6. Procédé de capture d'une image par un dispositif électronique (100) comprenant une caméra (110), le procédé comprenant :
l'activation (310) de la caméra ;
la détection (330) d'une entrée multipoint comprenant au moins deux entrées tactiles sur une zone périphérique comprenant la zone avant de l'affichage à écran tactile et une zone latérale de l'affichage à écran tactile ou du boîtier (531, 532, 533) provenant d'un utilisateur ; et
l'exécution (350, 370) d'une fonction de capture d'image à l'aide de la caméra sans autre entrée, en réponse à la libération d'une entrée tactile de l'entrée multipoint et au maintien de l'entrée multipoint.

7. Procédé selon la revendication 6, comprenant en outre l'exécution d'une fonction spécifiée en réponse à la détection de l'entrée multipoint.

8. Procédé selon la revendication 7, ladite exécution de la fonction spécifiée comprenant l'exécution d'une fonction de mise au point automatique.

9. Procédé selon la revendication 7, comprenant en outre l'interdiction de l'exécution de la fonction de capture d'image, lorsque l'au moins une entrée tactile de l'entrée multipoint est libérée alors que l'exécution de la fonction spécifiée n'est pas terminée.

10. Procédé selon la revendication 6, ladite activation de la caméra comprenant :
l'analyse d'au moins l'une d'une variation d'emplacement et d'une variation d'angle du dispositif électronique à l'aide d'une grandeur physique mesurée à l'aide d'un module de capteur ; et
l'activation de la caméra, en réponse au dépassement de la grandeur spécifiée par l'au moins une de la variation d'emplacement et de la variation d'angle.

11. Procédé selon la revendication 6, comprenant en outre la désactivation d'une autre caméra, en réponse à l'activation de la caméra alors que l'autre caméra est activée.
